(19) Europäisches Patentamt
European Patent Office
Office européen des brevets

(11) Veröffentlichungsnummer: **0 147 708**
**B1**

(12) **EUROPÄISCHE PATENTSCHRIFT**

(45) Veröffentlichungstag der Patentschrift: **19.04.89**

(51) Int. Cl.⁴: **C 08 G 65/40**

(21) Anmeldenummer: **84115039.4**

(22) Anmeldetag: **10.12.84**

(54) **Verzweigte, hochmolekulare, thermoplastische, Nitrilgruppen enthaltende Polyarylenether und deren Herstellung.**

(30) Priorität: **15.12.83 DE 3345416**

(43) Veröffentlichungstag der Anmeldung: **10.07.85 Patentblatt 85/28**

(45) Bekanntmachung des Hinweises auf die Patenterteilung: **19.04.89 Patentblatt 89/16**

(84) Benannte Vertragsstaaten: **BE CH DE FR GB IT LI NL**

(56) Entgegenhaltungen:
**DE-A-2 305 413**
**FR-A-2 122 562**
**FR-A-2 172 143**
**GB-A-1 201 534**
**US-A-3 798 255**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Blinne, Gerd, Dr. Chemiker, Im Woogtal 7, D-6719 Bobenheim (DE)**
Erfinder: **Bender, Herbert, Dr. Chemiker, Koenigsberger Strasse 5, D-6737 Boehl- Iggelheim (DE)**
Erfinder: **Neumann, Peter, Dr. Chem., Franz-Schubert- Strasse 1, D-6908 Wiesloch (DE)**

**EP 0 147 708 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Polymere, die Sulfon- und Ethergruppen enthalten, sind bereits bekannt. In der DE-AS-1 545 106 werden lineare Polyarylenpolyether beschrieben, die durch Umsetzung von Alkalimetalldoppelsalzen von Bisphenolen mit einer äquimolekularen Menge einer Dihalogenbenzolverbindung in Gegenwart von Sulfoxiden oder Sulfonen als Lösungsmitteln hergestellt wurden. Entsprechend der DE-OS-1 957 091 und 2 731 816 sowie der kanadischen Patentschrift 847 963 erhält man Polysulfonether aus Phenolaten und aromatischen Dihalogenverbindungen in Gegenwart von polaren hochsiedenden Lösungsmitteln und wasserfreiem Alkalicarbonat. Diese Polymeren haben den Nachteil, daß ihre Beständigkeit gegen Säuren und Alkalien sowie organischen Lösungsmitteln bei hohen Temperaturen zu wünschen übrigläßt. Zudem ist ihre Oberflächenhärte verbesserungsbedürftig.

Aus der DE-OS-2 940 190 ist auch bekannt, amidgruppenhaltige Polyether herzustellen. Diese verzweigten Polymeren weisen zwar eine verbesserte Lösungsmittelbeständigkeit auf, jedoch lassen die Farbqualität und Härteeigenschaften zu wünschen übrig. Zudem bedarf es zu ihrer Herstellung Monomerer die technisch schwer zugänglich sind.

Entsprechend der DE-PS-2 305 413 erhält man verzweigte Polyether durch Mitverwendung von geringen Mengen eines Triphenols oder einer Halogenarylverbindung, in der die Halogensubstituenten sich beispielsweise an mindestens zwei verschiedenen aromatischen Ringen befinden. Solche Polyether haben zwar eine verbesserte Lösungsmittelbeständigkeit, lassen jedoch hinsichtlich der Oberflächenhärte noch zu wünschen übrig.

Aus der US-PS-801 837 Defense sind vernetzte Polyether bekannt, die als Vernetzungsmittel Reste enthalten, die sich von Polyhalogenheterocyclen herleiten. Die Oberflächenhärte dieser Polymeren ist noch verbesserungsbedürftig.

Der Erfindung lag die technische Aufgabe zugrunde, Polyether mit verbesserter Lösungsmittelbeständigkeit und Oberflächenhärte unter Verwendung leicht zugänglicher Ausgangsstoffe herzustellen, ohne dabei die bewährten Verfahren zur Herstellung von Polyethern verändern zu müssen, mit dem Ziel, derartige Monomere auch zur Synthese verschiedener Co- oder Blockcopolymerisate nach bereits bekannten Verfahren zur Herstellung von Polyethern einsetzen zu können.

Gegenstand der Erfindung sind verzweigte, hochmolekulare, thermoplastische, Nitrilgruppen enthaltende Polyarylenether mit einem Molekulargewicht von 16 000 - 120 000, aufgebaut aus wiederkehrenden Einheiten der Formel

$$E_1\text{-O-}E_2\text{-O-} \qquad (I)$$

in der

$E_1$ einen Rest bezeichnet, der sich von Dihalogenverbindungen ableitet und

$E_2$ einen Rest bedeutet, der sich von Bisphenolen ableitet, und Verzweigungsmitteln gekennzeichnet durch einen Gehalt von 0,01 bis 5 Mol.-%, bezogen auf $E_1$, an mindestens einem Rest, der sich von Polyhalogenverbindungen der Formeln

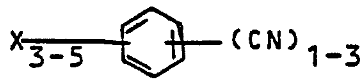

(II)

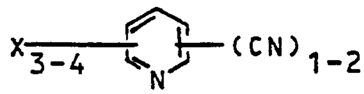

(III)

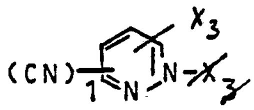

(IV)

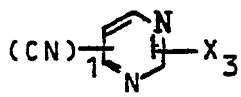

(V)

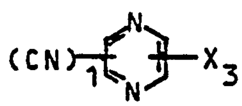

(VI)

ableitet, in denen X für Fluor oder Chlor steht.

Ferner ist ein Gegenstand der Erfindung ein Verfahren zur Herstellung von verzweigten, hichmolekularen, thermoplastischen Nitrilgruppen enthaltenden Polyarylenethern durch Polykondensation von im wesrentlichen äquivalenten Mengen eines Bisphenols oder einer Mischung mehrerer Bisphenole mit einer Dihalogenbenzolverbindung oder einer Mischung mehrerer Dihalogenbenzolverbindungen sowie Verzweigungsmitteln in Gegenwart von wasserfreiem Alkalicarbonat, dadurch gekennzeichnet, daß man als Verzweigungsmittel mindestens eine Polyhalogenbenzolverbindung der Formeln

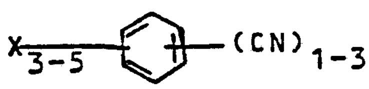

(II)

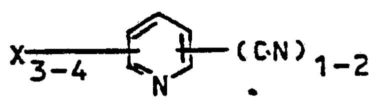

(III)

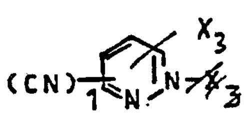

(IV)

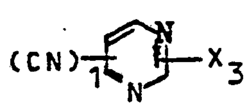

(V)

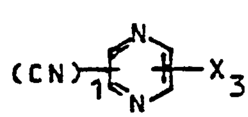

(VI)

in der X für ein Fluor- oder Chloratom steht, in einer Menge von 0,01 bis 5 Mol.-%, bezogen auf die Menge an Dihalogenbenzolverbindungen, mitverwendet.

Die erfindungsgemäßen verzweigten, Nitrilgruppenenthaltenden Polyarylenether zeichnen sich durch verbesserte Lösungsmittelbeständigkeit, Spannungsrißkorrosionsbeständigkeit und gleichzeitig hohe Oberflächenhärte aus. Sie sind erhältlich unter Verwendung von leicht zugänglichen Monomeren ohne dabei die bewährten Verfahren zur Herstellung von Polyethern verändern zu müssen. Zudem gelingt es, Co- und

Blockcopolymere durch Variieren der monomeren Ausgangsstoffe auf einfache Weise herzustellen.

Bevorzugte Bisphenole sind solche der Formel VII

$$HO - Ar^1 -[- (A^1)_n - Ar^1 -]-_m OH \qquad (VII)$$

in der

$Ar^1$ einen aromatischen Rest mit 6 bis 12 Kohlenstoffatomen insbesondere einen Phenylenrest und
$A^1$ einen zweiwertigen Rest aus der Gruppe $-C(CH_3)_2-$, -O-, -CO- und $-SO_2-$ bedeuten und
n und m für 0 oder 1 stehen.

Geeignete Bisphenole sind beispielsweise Hydrochinon, Resorcin, 4,4'-Bisphenol, Bis-(4-hydroxyphenyl)propan-2,2, Bis-(4-hydroxyphenyl)-keton oder Bis-(4-hydroxyphenyl)-sulfon. Die Bisphenole können einzeln oder in Form von Mischungen angewandt werden. Besondere Bedeutung haben Bis-(4-hydroxyphenyl)-sulfon und Bis-(4-hydroxyphenyl)-propan-2,2 erlangt.

Bevorzugte Dihalogenbenzolverbindungen sind solche der Formeln VIII bis X

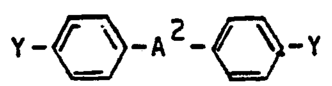
(VIII)

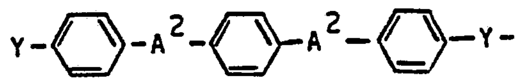
(IX)

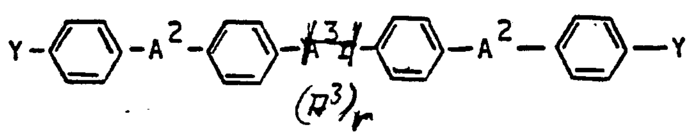
(X)

in denen

Y ein Fluoratom oder vorzugsweise ein Chloratom bezeichnen,
$A^2$ den Rest -CO- oder vorzugsweise $-SO_2-$ bedeutet,
$A^3$ für -O- oder -S- steht und
r 0 oder 1 ist.

Geeignete Polyhalogenbenzolverbindungen sind beispielsweise Bis-(4-chlorphenyl-)sulfon, Bis-(4-fluorphenyl-)sulfon, Bis-(4-chlorphenyl-)keton, 1,4-Bis-(4-chlorbenzoyl-)benzol, 1,4-Bis-(4-chlorbenzolsulfonyl)benzol, 4,4'-Bis-(4-chlorbenzoyl-)diphenylether, 4,4'-Bis-(4-chlorbenzoyl-)diphenylsulfid, 4,4'-Bis(4-chlorbenzoyl-)diphenyl, 4,4'-Bis-(4-chlorbenzol-sulfonyl-)diphenylether, 4,4'-Bis-(4-chlorbenzolsulfonyl-)diphenylsulfid oder 4,4'-Bis-(4-chlorbenzolsulfonyl-)diphenyl. Die Halogenbenzolverbindungen können einzeln oder als Gemische verwendet werden. Vorzugsweise verwendet man Bis-(4-Chlorphenyl-)sulfon oder 4,4'-Bis-(4-chlorbenzoyl-)-diphenylether.

Besonders bevorzugt verwendet man mindestens 70 Mol.-% an Bis-(4-hydroxyphenyl)sulfon oder 2,2-Bis-(4-hydroxyphenyl)propan-, bezogen auf die verwendete Menge an Bisphenolen und mindestens 70 Mol.-% an Bis-(4-chlorphenyl)sulfon, bezogen auf die Menge an Dihalogenbenzolverbindungen.

Die erfindungsgemäßen Verzweigungsmittel sind Polyhalogenverbindungen der Formeln II bis VI

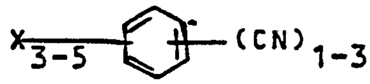

(II)

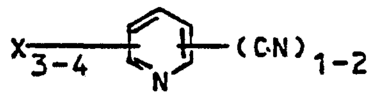

(III)

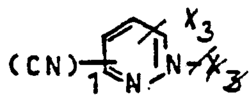

(IV)

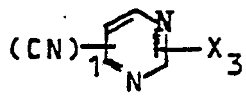

(V)

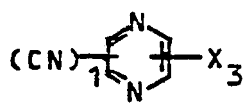

(VI)

in denen X ein Fluor- oder vorzugsweise ein Chloratom bezeichnet. Vorteilhaft stehen die Chloratom in ortho- und/oder para-Stellung zu den stickstoffhaltigen Resten.

Geeignete Polyhalogenverbindungen der Formeln II - VI sind beispielsweise Pentachlorbenzolnitril, Pentafluorbenzonitril, Tetrachlorphthalodinitril, Tetrachlorisophthalodinitril, Tetrachlorpyridincarbonsäurenitril, Trichlorpyridindicarbonsäuredinitril.

Besonders bevorzugte Polyhalogenverbindungen sind solche der Formel II und III, insbesondere Tetrachlorphtalodinitril, Pentachlorbenzonitril, Tetrachlorisophthalodinitril.

Die Umsetzung wird unter Mitverwendung von wasserfrein Alkalicarbonaten durchgeführt. Besonders geeignet sind Natrium- oder Kaliumcarbonate oder deren Mischung. Besonders bewährt hat sich Kaliumcarbonat.

Zur Herstellung der Polymeren kann man zuerst die Beispiele mit den Dihalogenbenzolverbindungen vollständig abreagieren lassen, und dann erst tri- oder mehrfunktionelle Polyhalogenverbindungen zugeben. Andererseits ist es auch möglich, die Zugabe der Halogenverbindungen in umgekehrter Reihenfolge durchzuführen.

Die vorgenannten Polyhalogenverbindungen der Formeln II bis VI verwendet man vorteilhaft in Mengen von 0,01 bis 5 Mol-%, vorzugsweise 0,1 bis 2 Mol-%, bezogen auf die Menge an Dihalogenbenzolverbindungen.

Nach einer bevorzugten Ausführungsform des Verfahrens setzt man ein 1 Mol Bisphenol oder Bisphenolgemisch mit 0,9 bis 1,1 Mol, vorzugsweise ungefähr einem Mol Dihalogenbenzolverbindungen sowie Verzweigungsmitteln der Formeln II bis VI und 1,0 bis 2,2 Mol, vorzugsweise 1,1 bis 2,0 Mol, wasserfreiem Kaliumcarbonat in Abwesenheit von Lösungsmittel, vorzugsweise in der Schmelze bei Temperaturen von 200 bis 400°C, oder bis zur beginnenden Zersetzung der Komponenten, vorzugsweise von 250 bis 350°C, um. Die erfindungsgemäßen Polyhalogenverbindungen der Formeln II bis VI können zu jedem Zeitpunkt der Reaktion zugesetzt werden.

Das Reaktionsgemisch wird solange im genannten Temperaturbereich polykondensiert, bis der erforderliche Kondensationsgrad erreicht ist. Die Polykondensationszeit beträgt in der Regel von 0,1 bis 10 Stunden, vorzugsweise von 0,2 bis 2 Stunden und ist abhängig von den gewählten Ausgangsverbindungen. Als Endgruppen für die Polykondensate eignen sich alle chemisch inerten Gruppen. Zum Einbau der Endgruppen wird dem Polykondensationsgemisch zweckmäßig nach Erreichen des gewünschten Polykondensationsgrades eine entsprechende monofunktionelle Verbindung in einer geringen Menge zugesetzt. Vorzugsweise verwendet man aliphatische oder aromatische Monohalogenverbindungen, insbesondere Methylchlorid.

Die anorganischen Nebenprodukte, beispielsweise Natrium- oder Kaliumchlorid werden in der Regel durch geeignete Methoden wie Lösen und Filtrieren, Sieben oder Extrahieren entfernt.

Nach einer anderen bevorzugten Methode setzt man 1 Mol Bisphenol mit ungefähr 1 Mol Dihalogenbenzolverbindungen und den genannten Mengen an Polyhalogenverbindungen sowie 1,0 bis 2,2 Mol wasserfreiem Alkalicarbonat in polaren, aprotischen Lösungsmitteln bei einer Temperatur von 150 bis 300°C, vorzugsweise 180 bis 250°C um, und das hierbei entstehende Wasser wird beispielsweise mit Hilfe von Azeotropbildnern entfernt, kann aber auch ohne Mitverwendung von Azeotropbildnern abdestilliert werden.

Als polare, aprotische Lösungsmittel eignen sich N-substituierte Säureamide, Sulfoxide oder Sulfone wie N,N-Dimethylformamid, N,N-Dimethylacetamid, N-Methylpyrrolidon, Dimethylsulfoxid, Dimethylsulfon,

Tetramethylsulfon oder Diphenylsulfon. Bevorzugt wird N-Methylpyrrolidon verwendet.

Die polaren, aprotischen Lösungsmittel werden in der Regel in Mengen von 5 bis 100, vorzugsweise von 10 bis 20 Mol je Mol Bisphenol verwendet. Dieses beinhaltet, daß man 5 bis 50 gew.-%-ige, vorzugsweise 20 bis 40 gew.-%-ige Polymerlösungen erhält.

Geeignete Wasser-Azeotropbildner sind alle Substanzen, die im Bereich der Reaktionstemperatur bei Normaldruck sieden und sich mit dem Reaktionsgemisch homogen mischen lassen, ohne chemische Reaktionen einzugehen. Als Azeotropbildner der genannten Art seien beispielsweise genannt: Chlorbenzol, Toluol oder Xylol. Bevorzugt wird Chlorbenzol verwendet.

Vorteilhaft wird das Reaktionsgemisch in einer ersten Reaktionsstufe bis zu Abtrennung von mindestens 90 Gew.-%, vorzugsweise 90 bis 96 Gew.-%, der theoretisch möglichen Wassermenge, vorteilhaft 0,5 bis 4 Stunden, vorzugsweise 1 bis 2 Stunden, erhitzt.

In der zweiten Reaktionsstufe wird bis zur völligen Wasserfreiheit kondensiert. Hierzu kann das Reaktionsgemisch ständig mit Azeotropbildner versetzt und gleichzeitig das entstehende Azeotropgemisch abdestilliert werden. Die Reaktionszeit beträgt in der Regel 0,5 bis 4 Stunden, vorzugsweise 1 bis 2 Stunden.

Nach Erreichen des gewünschten Molekulargewichtes wird die Polykondensation durch Einleiten von geeigneten Monohalogenverbindungen, wie Methylchlorid, abgebrochen.

Die Isolierung des Polyethers kann auf verschiedene Weise durchgeführt werden. Nach einer möglichen Arbeitsweise wird Polyether mit einem Fällungsmittel, z. B. Wasser und/oder Methanol, ausgefällt. Andererseits ist es auch möglich, das Lösungsmittel zu verdampfen. Die anorganischen Bestandteile werden durch geeignete Methoden wie Lösung, Filtrieren oder Sieben aus dem Polyether entfernt.

Die erfindungsgemäßen Polyether haben reduzierte Viskositäten (gemessen bei 23°C in 1 gew.-%-iger Lösung in Schwefelsäure) von 0,4 bis 1,5, vorzugsweise von 0,6 bis 1,2. Dies entspricht etwa Molekulargewichten von 16 000 bis 120 000, vorzugsweise 25 000 bis 80 000.

Die erhältlichen Polyether eignen sich zur Herstellung von Formkörpern, Fasern, Folien, Kleb- und Beschichtungsstoffen.

Die Erfindung sei an folgenden Beispielen erläutert. Die genannten Teile sind Gewichtsteile. Sie verhalten sich zu den Raumteilen wie kg zu l. Die reduzierte Viskosität (ηred) wurde bei 24°C in 1 gew.-%-iger Lösung in Schwefelsäure gemessen und entsprechend der Formel

$$\eta red = \frac{\eta spez}{c}$$

bestimmt.

**Beispiel 1**

228,3 Teile 2.2-Bis(4-hydroxyphenyl)propan wurden in 900 Teilen N-Methylpyrrolidon mit 140 Teilen wasserfreiem Kaliumcarbonat versetzt. Das Reaktionsgemisch wurde unter ständigem Abdestillieren von Wasser innerhalb von zwei Stunden auf 190°C erhitzt. Nachdem 18 Teile Wasser entfernt waren, wurden 285,7 Teile Bis(4-chlorphenyl)sulfon und 1,38 Teile Pentachlorbenzonitril zugefügt und das Reaktionsgemisch 7 Stunden bei 190°C gerührt. Durch 30-minütiges Einleiten eines Methylchlorid-Stromes wurde die Polykondensation abgebrochen. Die anorganischen Bestandteile wurden nach Zugabe von 600 ml N-Methylpyrrolidon abfiltriert, das Polymere in Wasser ausgefällt und 12 Stunden bei 80°C im Vakuum getrocknet. Es besaß die in Tabelle 1 aufgeführten Eigenschaften.

**Beispiel 2**

250,3 Teile Bis(4-hydroxyphenyl)sulfon wurden in 900 Teilen N-Methylpyrrolidon mit 140 Teilen wasserfreiem Kaliumcarbonat und analog Beispiel 1 verfahren mit dem Unterschied, daß nach Zugabe von 285,7 Teilen Bis(4-chlorphenyl)sulfon und 1,38 Teilen Pentachlorbenzonitril 8 Stunden bei 210°C gerührt wude. Das erhaltene Polymere ist in Tabelle 1 näher beschrieben.

**Beispiele 3 bis 6**

Man verfährt analog Beispiel 1, setzt jedoch die in der Tabelle 1 aufgeführten Monomeren ein. Die Ergebnisse sind aus Tabelle 1 zu entnehmen.

**Vergleichsbeispiele A bis G**

Man verfährt bei A, C, D und G analog Beispiel 1, setzt jedoch die in der Tabelle 2 aufgeführten Monomeren ein. Der Vergleichsversuch B wird analog Beispiel 2 durchgeführt. Bei Versuch E wird nach Beispiel 1 der DE-OS-2 940 190, bei F nach Beispiel 1 der DE-PS-2 305 413 verfahren. Die Eigenschaften der Polymeren sind aus Tabelle 2 zu entnehmen.

Tabelle 1

| Beispiel | Bisphenol (Teile) | Polyhalogenverbindungen bifunktionell (Teile) | vernetzend (Teile | $\eta_{red}$ (dl/g) | Lösungsmittelbeständigkeit* | Oberflächenhärte |
|---|---|---|---|---|---|---|
| 1 | 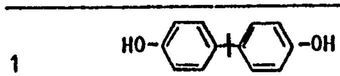 (228,3) | 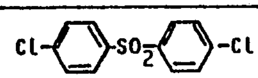 (285,7) | 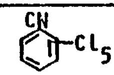 (1,32) | 0,90 | sehr gut | sehr gut |
| 2 | 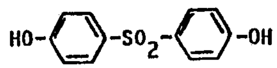 (250,3) | 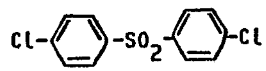 (285,7) | 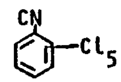 (1,32) | 0,85 | sehr gut | gut |
| 3 | 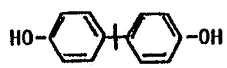 (228,3) | 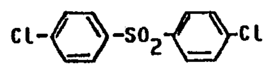 (285,7) | 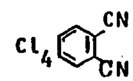 (1,38) | 1,05 | gut | sehr gut |
| 4 | " | 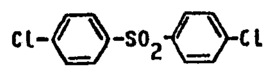 (284,3) | 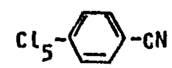 (2,75) | 1,10 | sehr gut | sehr gut |
| 5 | " | 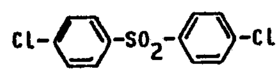 (282,9) | 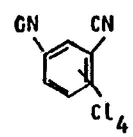 (4,14) | 0,95 | sehr gut | sehr gut |
| 6 | " | 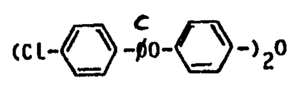 (446,0) | 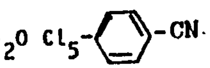 (0,83) | 0,85 | sehr gut | gut |

Tabelle 2

| Vergleichs-beispiel | Bisphenol (Teile) | Polyhalogenverbindungen bifunktionell (Teile) | Polyhalogenverbindungen vernetzend (Teile | $\eta_{red}$ (dl/g) | Lösungsmittelbeständigkeit* | Oberflächenhärte |
|---|---|---|---|---|---|---|
| A | 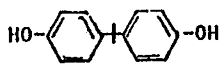 (228,3) | 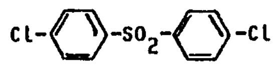 (287,2) | - | 0,95 | schlecht | sehr schlecht |
| B | 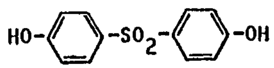 (250,3) | 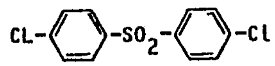 (287,2) | - | 1,05 | schlecht | schlecht |
| C | 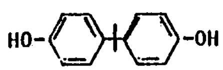 (228,3) | 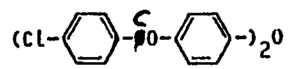 (447,3) | - | 0,85 | mäßig | mäßig |
| D | 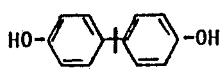 (228,3) | 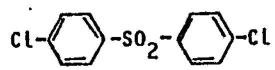 (278,6) | 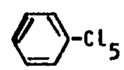 (8,0) | ver-netzt | nicht verarbeitbar, daher nicht prüfbar | |
| E | 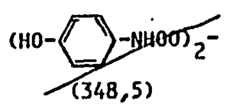 (348,5) | 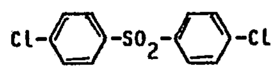 (287,2) | - | 0,75 | mäßig | schlecht |

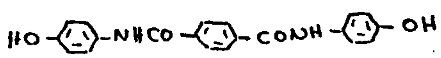

348,5

Forts. Tabelle 2

| Vergleichsbeispiel | Bisphenol (Teile) | Polyhalogenverbindungen bifunktionell (Teile) | Polyhalogenverbindungen vernetzend (Teile) | $\eta_{red}$ (dl/g) | Lösungsmittelbeständigkeit* | Oberflächenhärte |
|---|---|---|---|---|---|---|
| F | 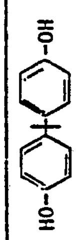 (228,3) 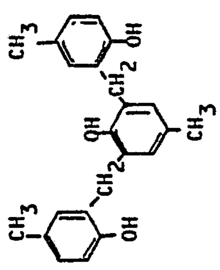 (3,48) | 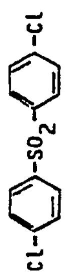 (291,5) | - | 1,10 | gut | schlecht |
| G | 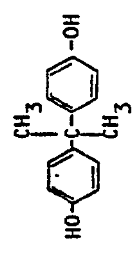 (228,3) | 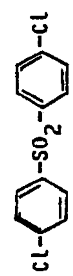 (278,6) | 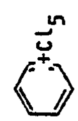 (2,0) | 1,05 | gut | schlecht |

*geprüft in: Methylenchlorid, Aceton und Chlorbenzol

**Patentansprüche**

1. Verzweigte, hochmolekulare, thermoplastische, Nitrilgruppen enthaltende Polyarylenether mit einem Molekulargewicht von 16 000 - 120 000, aufgebaut aus wiederkehrenden Einheiten der Formel I

$-E_1-O-E_2-O-$, (I)

in der
$E_1$ einen Rest bezeichnet, der sich von Dihalogenbenzolverbindungen ableitet und in der
$E_2$ einen Rest bedeutet, der sich von Bisphenolen ableitet, und Verzweigungsmitteln, gekennzeichnet durch einen Gehalt von 0,01 bis 5 Mol-%, bezogen auf den Rest $E_1$ an mindestens einem Rest, der sich von Polyhalogenverbindungen der Formeln

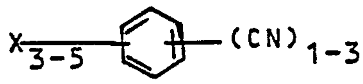

(II)

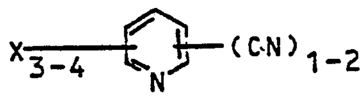

(III)

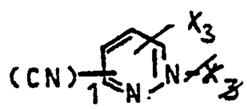

(IV)

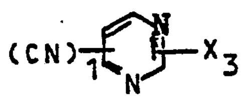

(V)

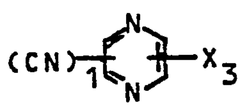

(VI)

in denen X für ein Fluor- oder Chloratom steht, ableitet.

2. Polyarylenether nach Anspruch 1, gekennzeichnet durch einen Gehalt an Resten, die sich von Polyhalogenverbindungen der Formeln II und III ableiten.

3. Polyarylenether nach den Ansprüchen 1 und 2, dadurch gekennzeichnet, daß sie aus Resten aufgebaut sind, die sich von Bis-(4-halogenphenyl)-sulfon und Bis-(4-hydroxyphenyl)-sulfon und/oder Bis-(4-hydroxyphenyl)-propan-2,2 ableiten.

4. verfahren zur Herstellung von verzweigten hochmolekularen, thermoplastischen, Nitrilgruppen enthaltenden Polyarylenethern gemäß Ansprüch 1, durch Polykondensation von im wesentlichen äquivalenten Mengen eines Bisphenols oder einer Mischung mehrerer Bisphenole mit einer Dihalogenbenzolverbindung oder Mischung mehrerer Dihalogenbenzolverbindungen sowie Verzweigungsmitteln in Gegenwart von wasserfreiem Alkalicarbonat, dadurch gekennzeichnet, daß man mindestens eine Polyhalogenbenzolverbindung der Formeln II bis VI in einer Menge von 0,01 bis 5 Mol-%, bezogen auf die Menge der verwendeten Dihalogenbenzolverbindungen einsetzt.

5. Verfahren nach Anspruch 4, <u>dadurch gekennzeichnet</u>, daß man 0,1 bis 2 Mol-% Polyhalogenverbindungen der Formeln II bis VI, bezogen auf die Menge an Dihalogenbenzolverbindungen, einsetzt.

6. Verfahren nach den Ansprüchen 4 und 5, <u>dadurch gekennzeichnet</u> daß man Polyhalogenbenzolverbindungen der Formeln II und III mit einsetzt.

7. Verfahren nach den Ansprüchen 4 bis 6, <u>dadurch gekennzeichnet</u>, daß man mindestens 70 Mol-% Bis-(4-chlorphenyl)sulfon, bezogen auf die Menge der verwendeten Dihalogenbenzolverbindungen, einsetzt.

8. Verfahren nach den Ansprüchen 4 bis 7, <u>dadurch gekennzeichnet</u>, daß man mindestens 70 Mol-% Bis-(4-hydroxyphenyl)sulfon, bezogen auf die Menge der eingesetzten Bisphenole einsetzt.

9. Verfahren nach den Ansprüchen 4 bis 7, <u>dadurch gekennzeichnet</u>, daß man mindestens 70 Mol-% Bis-(4-hydroxyphenylpropan)2,2, bezogen auf die Menge der Bisphenole, einsetzt.

**Revendications**

1. Ethers de polyarylène ramifiés thermoplastiques, contenant des groupes nitrile et possédant un poids moléculaire élevé de 16 000 à 120 000, constitués d'unités récurrentes de la formule I

$$-E_1 - O - E_2 - O - \qquad (I),$$

dans laquelle

$E_1$ désigne un groupe dérivé de composés dihalo-benzéniques et

$E_2$ un groupe dérivé de bisphénols, et d'agents de ramification, caractérisés en ce qu'ils contiennent entre 0,01 et 5 % molaires par rapport au groupe $E_1$ d'au moins un groupe dérivé de composés polyhalogénés des formules

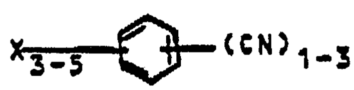

(II)

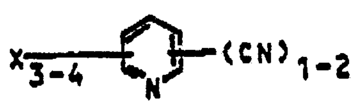

(III)

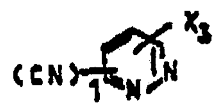

(IV)

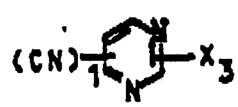

(V)

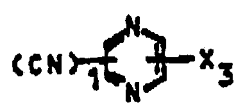

(VI)

dans lesquelles X désigne un atome de fluor ou de chlore.

2. Ethers de polyarylène suivant la revendication 1, caractérisés en ce qu'ils contiennent des groupes dérivés des composés polyhalogénés des formules II et III,

3. Ethers de polyarylène suivant les revendications 1 et 2, caractérisés en ce qu'ils sont constitués de groupes dérivés de la bis-(4-halo-phényl)-sulfone et de la bis-(4-hydroxy-phényl)-sulfone et (ou) du bis-(4-hydroxy-phényl)-propane-2,2.

4. Procédé de préparation d'éthers de polyarylène ramifiés thermoplastiques, contenant des groupes nitrile et possédant un poids moléculaire élevé suivant la revendication 1, par une polycondensation de proportions essentiellement équivalentes d'un bisphénol ou d'un mélange de plusieurs pisphénols et d'un dérivé de dihalo-benzène ou d'un mélange de plusieurs dérivés de dihalo-benzènes, ainsi que d'agents de ramification, en présence d'un carbonate d'un métal alcalin anhydre, caractérisé en ce que l'on met en oeuvre au moins un dérivé polyhalo-benzénique des formules II à VI en une proportion de 0,1 à 5 % molaires par rapport à la proportion des composés dihalobenzéniques employés.

5. Procédé suivant la revendication 4, caractérisé en ce que l'on utilise entre 0,1 et 2 % molaires, par rapport aux composés dihalo-benzéniques, de composés polyhalogénés des formules II à VI.

6. Procédé suivant les revendications 4 et 5, caractérisé en ce que l'on utilise des composés polyhalo-benzéniques des formules II et III.

7. Procédé suivant les revendications 4 à 6, caractérisé en ce que l'on emploie au moins 70 % molaires, par rapport à la quantité de composés dihalo-benzéniques utilisée, de bis-(4-chlorophényl)-sulfone.

8. Procédé suivant les revendications 4 à 7, caractérisé en ce que l'on emploie au moins 70 % molaires, par rapport à la quantité de bisphénols utilisée, de bis-(4-hydroxyphényl)-sulfone.

9. Procédé suivant les revendications 4 à 7, caractérisé en ce que l'on emploie au moins 70 % molaires, par rapport à la quantité de bisphénols, de bis-(4-hydroxyphényl)-propane-2,2.

## Claims

1. A branched, high molecular weight, thermoplastic polyarylene ether which contains nitrile groups, has a molecular weight of from 16,000 to 120,000 and consists of repeating units of the formula

$-E_1-O-E_2-O-$,

where
$E_1$ is a radical derived from a dihalobenzene compound and
$E_2$ is a radical derived from a bisphenol, and a branching agent, containing from 0.01 to 5 mol %, based on the radical $E_1$, of one or more radicals derived from polyhalo compounds of the formulae

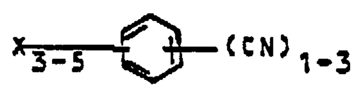
(II)

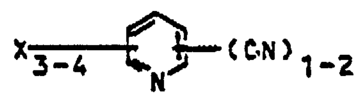
(III)

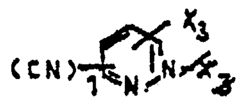
(IV)

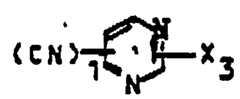
(V)

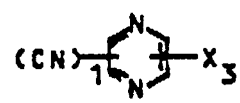
(VI)

where X is fluorine or chlorine.

2. A polyarylene ether as claimed in claim 1, which contains radicals derived from polyhalo compounds of the formulae II and III.

3. A polyarylene ether as claimed in either of claims 1 and 2, which consists of radicals derived from bis-(4-halophenyl) sulfone and bis-(4-hydroxyphenyl) sulfone and/or 2,2-bis-(4-hydroxyphenyl)-propane.

4. A process for the preparation of a branched, high molecular weight, thermoplastic polyarylene ether containing nitrile groups as claimed in claim 1 by polycondensation of essentially equivalent amounts of a bisphenol, or of a mixture of plurality of bisphenols, with a dihalobenzene compound or a mixture of a plurality of dihalobenzene compounds, and a branching agent, in the presence of an anhydrous alkali metal carbonate, wherein one or more polyhalobenzene compounds of the formulae II to VI, in an amount of from 0.01 to 5 mol %, based on the amount of dihalobenzene compounds used, are employed.

5. A process as claimed in claim 4, wherein from 0.1 to 2 mol %, based on the amount of dihalobenzene compounds, of polyhalo compounds of the formulae II to VI is employed.

6. A process as claimed in either claims 4 and 5, wherein polyhalobenzene compounds of the formulae II and III are present.

7. A process as claimed in any of claims 4 to 6, wherein not less than 70 mol %, based on the amount of dihalobenzene compounds used, of bis-(4-chlorophenyl) sulfone is employed.

8. A process as claimed in any of claims 4 to 7, wherein not less than 70 mol %, based on the amount of bisphenols used, of bis-(4-hydroxyphenyl) sulfone is employed.

9. A process as claimed in any of claims 4 to 7, wherein not less than 70 mol %, based on the amount of bisphenols, of 2,2-bis-(4-hydroxyphenyl)-propane is employed.